# EUROPEAN PATENT APPLICATION

(11) **EP 2 806 320 A1**
(43) Date of publication of application: **26.11.2014**
(21) Application number: 14168917.4
(22) Date of filing: 20.05.2014
(51) Int. Cl.: G05B 19/4093

(54) **Machines and control methods of the same**

(30) Priority: 24.05.2013 JP 2013110035
(71) Applicant: Kanefusa Kabushiki Kaisha, Niwa-gun, Aichi 480-0192 (JP)
(72) Inventor: Nishio, Satoru, Niwa-gun, Aichi 480-0192 (JP); Yamada, Nobuhide, Niwa-gun, Aichi 480-0192 (JP); Nakano, Takao, Niwa-gun, Aichi 480-0192 (JP)
(74) Representative: Baumgärtel, Gunnar

(57) **Abstract**

Embodiments of the present invention may include a method of controlling a machine (1). In the method, a cutting velocity at which work piece is cut is set so as to attain a maximum life of a tool (21) based on a machinability ratio MR of the work piece. The machinability ratio MR may be calculated from the following equation: MR = 86.0 - 37.6×C-8.2×Mn-6.1×Si-5.6×Ni-3.2×Cr-3.1×Mo, where C, Mn, Si, Ni, Cr, and Mo respectively represent the weight percentage (wt%) of carbon, manganese, silicon, nickel, chromium, and molybdenum included in the work piece.

## Description

This application claims priority to Japanese patent application serial number 2013-110035, the contents of which are incorporated herein by reference.

Embodiments of the present invention relate to machines, such as a cutting machine, for cutting work piece by a cutting tool, and a method of controlling the same.

In a general machine, cutting velocity and feeding amount per tooth are determined according to work piece to be cut by the machine. RPM of a cutting tool and feeding speed are set based on the cutting velocity and the feeding amount. The machine for cutting the work piece may be a circular sawing machine or a milling machine. The circular sawing machine cuts work piece through the rotation of a circular saw blade. The milling machine cuts work piece through the rotation of an end mill or a face mill.

The work piece consists of metal or some other material selected from various materials. Japanese Patent No. 2869123 discloses a sawing machine having an input unit to which cutting data such as the nature of the work piece is input. It also includes an arithmetic unit configured to compute the blade speed during initial operation (running-in) based on the cutting data, etc. During initial operation, the saw blade, which is equipped with a sharp blade edge, is subject to damage. In view of this, the blade speed during initial operation is lowered to thereby prevent premature damage of the saw blade. As a result, the blade speed during initial operation is set without input from the operator. In this way it is possible to prevent the premature deterioration of the saw blade due to improper input by the operator.

There has been a desire to increase the service life of the cutting tool not only during initial operation but also during normal operation. Conventionally, a proper cutting velocity deemed to lengthen the life of the cutting tool has been determined based on the experience of operators. An appropriate cutting velocity has been determined based on the results of repeated experiments. Thus, there is a need for a machine capable of easily obtaining a cutting velocity helping to elongate the service life of the cutting tool.

Certain embodiments of the present invention include a controlling method of a machine. In the method, a cutting velocity at which work piece is cut is set so as to attain a maximum service life of a tool based on a machinability ratio MR of the work piece. The machinability ratio MR may be calculated from the following equation: MR = 86.0 - 37.6 × C - 8.2 × Mn - 6.1 × Si - 5.6 × Ni - 3.2 × Cr - 3.1 × Mo, where C, Mn, Si, Ni, Cr, and Mo respectively represent the weight percentage (wt%) of carbon, manganese, silicon, nickel, chromium, and molybdenum included in the work piece.

Certain embodiments of the present invention include a machine. The machine may have a material-MR storage arithmetic unit and an MR-V storage unit. The material-MR storage arithmetic unit calculates a machinability ratio MR based on a material data of the work piece. The MR-V storage unit previously stores a relationship MR-V between the machinability ratio MR and a desired cutting velocity V. The desired cutting velocity V is determined by taking into account that a service life of a cutting tool attains a maximal length. A cutting velocity is obtained from the relationship MR-V, and the work piece is cut based on the obtained cutting velocity.

After careful study, the present inventor could achieve a relationship between the service life of a cutting tool and a cutting velocity V. The machinability ratio MR also has a relationship to those values. When cutting work piece, material data related to the machinability ratio MR is input. From the material data, the cutting velocity V is obtained reliably and easily. Thus, it is possible to obtain a suitable cutting velocity V independently of the experience of an operator. For example, when the work piece is changed to different work piece, it is possible to obtain a suitable cutting velocity V quickly and reliably. As a result, it is possible to lengthen the service life of the cutting tool.

Additional objects, features, and advantages, of the present invention will be readily understood after reading the following detailed description together with the claims and the accompanying drawings, in which:
FIG. 1 is a front schematic view of an embodiment;
FIG. 2 is a control block diagram of an embodiment;
FIG. 3 is a flow chart of a control procedure of an embodiment;
FIG. 4 is a graph of service life of a tool and a cutting velocity V in accordance with different materials to be operated on; and
FIG. 5 is a graph of machinability ratio MR and preferable cutting velocity.

Each of the additional features and teachings disclosed above and below may be utilized separately or in conjunction with other features and teachings to provide improved machines. Representative examples of the present invention, which utilize many of these additional features and teachings both separately and in conjunction with one another, will now be described in detail with reference to the attached drawings. This detailed description is merely intended to teach a person of ordinary skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful configurations of the present teachings.

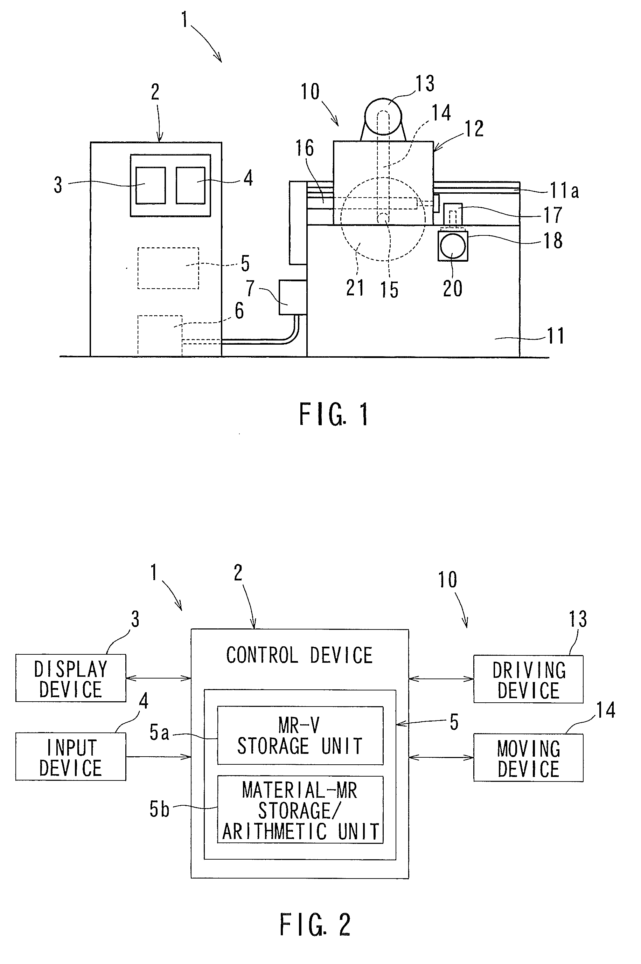

An embodiment of the present invention will be described with reference to FIGS. 1 to 5. As shown in FIG. 1, a cutting machine 1 has a circular sawing machine 10 and a control device 2 configured to control the circular sawing machine 10. The circular sawing machine 10 has a base 11 and a head 12 provided so as to be slidable on a rail 11a of the base 11.

As shown in FIG. 1, a rotation shaft 15 is provided in a head 12, and a cutting tool 21 such as a circular saw blade is mounted to the rotation shaft 15. A drive device 13 such as a servo motor is provided on top of the head 12. A belt 14 or the like is provided between the drive device 13 and the rotation shaft 15. The power of the drive device 13 is transmitted to the rotation shaft via the belt 14 and a speed reduction device or the like. As a result, the cutting tool 21 rotates together with the rotation shaft 15.

The circular saw blade constituting the cutting tool 21 has a disc formed of a metal such as steel, and an edge formed on the outer periphery of the disc. A plurality of edges are provided at predetermined intervals on the outer periphery of the disc. The edges may consist of cutting edges integrally formed on the disc, or tips mounted to the disc. The tips are formed of cemented carbide, cermet, cBN (cubic boron nitride), high-speed steel, diamond or the like. Coating may be performed on the tips and the cutting edges.

As shown in FIG. 1, the base 11 is provided with a charging port 18 and a retaining device 17. The charging port 18 allows opening of the surface of the base 11 and insertion of work piece 20 into the base 11. The retaining device 17 has a cylinder or the like. Through telescopic movement, the cylinder can fix the work piece 20 in a position on the base 11. The work piece 20 is in the form of an elongated bar, and is formed of steel material or the like.

As shown in FIG. 1, the base 11 is provided with a moving device 16 equipped with a cylinder or the like. One end of the moving device 16 is attached to the base 11, and the other end thereof is attached to the head 12. Through telescopic movement, the moving device 16 causes the head 12 to reciprocate with respect to the base 11. Through movement of the head 12, the cutting tool 21 reaches the work piece 20, whereby the cutting tool 21 cuts the work piece 20.

As shown in FIGS. 1 and 2, the control device 2 is provided along with a display device 3 and an input device 4. Based on a signal from the control device 2, the display device 3 displays the item of information to be input by the operator. For example, the display device 3 displays the tool type, the type of material to be operated on, etc. The operator can input information from the input device 4 while checking the display on the display device 3. The input device 4 imparts input information to the control device 2. Based on the input information, the control device 2 emits an output signal for controlling the circular sawing machine 10. The output signal is imparted to the circular sawing machine 10 via I/O ports 6 and 7 provided in the circular sawing machine 10.

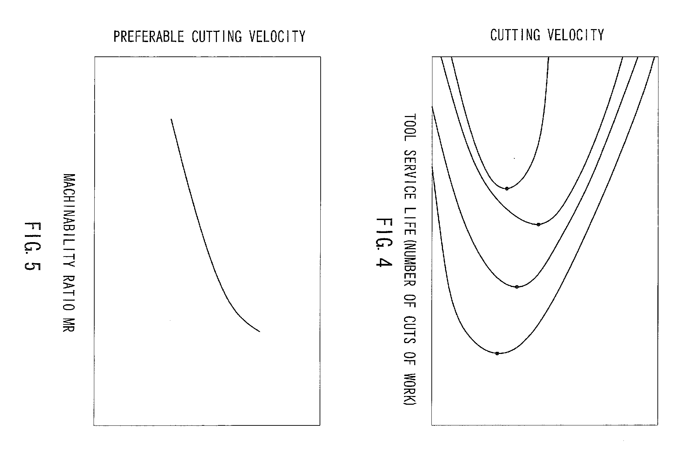

FIGS. 4 and 5 illustrate results obtained through experiment, etc. by the inventor. As can be seen from FIG. 4, the life of the tool with respect to the work piece 20 is related to the cutting velocity V. The life of the tool is determined by the number of cuts of the work piece 20 when, as a result of the cutting of the work piece 20, the cutting tool 21 attains the limit in cutting quality due to fracture or wear. It can be seen from FIG. 4 that the life of the tool is at a maximum at a predetermined cutting velocity V. Each curve is determined by the material of the work piece 20. It can be seen from FIG. 4 that every curve exhibits a cutting velocity V where the life of the tool is at a maximum. The suitable cutting velocity V providing a maximum life of the tool is indicated by a dot on each line in FIG. 4.

Each material has an inherent or a referential machinability ratio MR. The machinability ratio MR is a value indicating how hard it is to cut work piece. The machinability ratio MR is defined as follows. A basic cutting velocity V, at which a predetermined life of the tool is attained through cutting sulfur free cutting steel, is assumed to be 100. A cutting velocity V, with respect to a comparative material at which the predetermined life of the tool is attained, is divided the basic velocity. Thus, the machinability ratio MR of a comparative material is a percentage of the basic cutting velocity.

FIG. 4 shows that it is possible to attain a suitable cutting velocity V for various kinds of work piece. The cutting tips are subject to fracture at low cutting velocity, and subject to wear at high cutting velocity. Thus, there exists a preferable cutting velocity at which the life of the tool is a maximum. Each kind of material exhibits a machinability ratio MR. In FIG. 5, the suitable cutting velocity V and the machinability ratio MR providing a maximum life of the tool for various materials are plotted. As shown in FIG. 5, the machinability ratio MR and the suitable cutting velocity V are in an MR-V relationship. The MR-V relationship can also be represented by an approximation line. In the MR-V relationship, the larger the machinability ratio MR, the higher the suitable cutting velocity V.

The curves of FIG. 4 and the MR-V relationship in FIG. 5 differ depending on the tool type. The tool type is determined by at least one of following: the material of the edge of the cutting tool, cutlery steel type, the kind of tip material, the coating material, or the various cutter angles (rake angle, etc.). The tool type is classified, for example, into a plurality of types, and one of the plurality of types can be selected based on tool data.

As shown in FIG. 2, the control device 2 has a storage device 5. The storage device 5 has an MR-V storage unit 5a and a material-MR storage/arithmetic unit 5b. The MR-V storage unit 5a previously stores the MR-V relationship in the different tool types. Information on the MR-V relationship is stored by a map, approximation formula, etc. The material-MR storage/arithmetic unit 5b stores the material names of work piece and the corresponding machinability ratios MR. Further, there is stored the relationship between the chemical components of the work piece and the machinability ratio MR with respect to the mass percentages (mass%) or weight percentages (wt%) of the chemical components. The above relationship can be represented, for example, by the following equation.

MR = 86.0 - 37.6 × C - 8.2 × Mn - 6.1 × Si - 5.6 × Ni - 3.2 × Cr - 3.1 × Mo. MR is the machibility ratio. C is the wt% or mass% of carbon. Mn is the wt% or mass% of manganese. Si is the wt% or mass% of silicon. Ni is the wt% or mass% of nickel. Cr is the wt% or mass% of chromium. Mo is the wt% or mass% of the molybdenum.

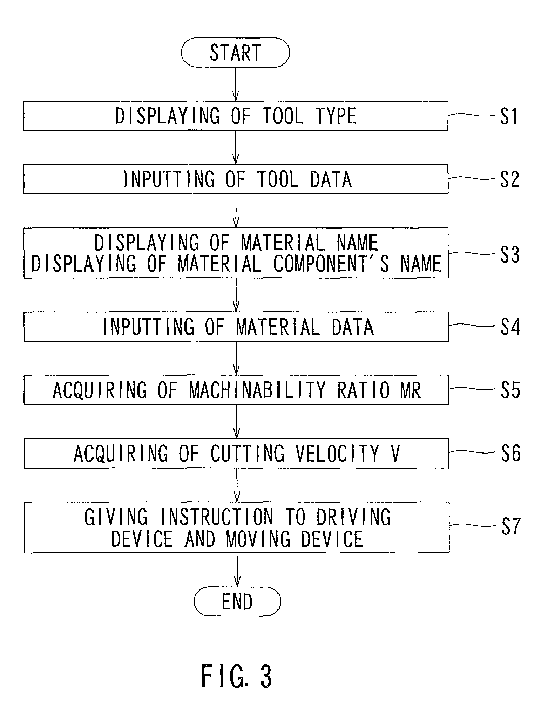

When cutting the work piece 20, the work piece is fixed in position on the base 11 by the retaining device 17. Based on a program stored in the storage device 5, the control device 2 transmits a signal to the display device 3. Based on the above signal, the display device displays information for getting the tool type (step S1 in FIG. 3). Referring to the information displayed on the display device 3, the operator inputs tool data to the input device 4 in order to get the tool type (step S2). The tool data includes, for example, at least one of the following items: the kind of edge material of the cutting tool, the kind of tip material, the coating material, the various edge angles (such as rake angle), the diameter, and the number of teeth. The control device 2 may determine the tool type from the tool data. Alternatively, the operator may directly input the tool type to the input device 4 referring to the information displayed on the display device 3.

Next, based on the signal from the control device 2, the display device 3 displays the material information on the work piece 20 (step S3). The material information includes, for example, the typical material name of the work piece 20, such as S10C, S45C, SCM420 (chromium-molybdenum steel), or SUJ2 (high carbon chromium bearing steel). Referring to the material information displayed on the display device 3, the operator can input the material name to the input device 4 as the material data (step S4). Alternatively, the material information may urge the operator to input the chemical components and the mass or weight percentages. Referring to the material information displayed on the display device 3, the operator can input the chemical components and the mass or weight percentages of the work piece 20 (step S4).

The input device 4 transmits the material name as the material data to the control device 2. Alternatively, the input device 4 transmits the chemical components and the mass or weight percentages as the material data. Based on the material data, the control device 2 acquires the machinability ratio MR (step S5). When the material data relates to the material name, the material-MR storage/arithmetic unit 5b acquires the machinability ratio MR corresponding to the material name from the stored information. When the material data relates to the chemical components and the mass or weight percentages, the material-MR storage/arithmetic unit 5b computes the machinability ratio MR from the stored relational expression.

Next, based on the machinability raito MR (or the machinability ratio MR and the tool type), the control device 2 acquires the cutting velocity V providing maximum life of the tool from the MR-V relationship stored in the MR-V storage unit 5a (step S6). Next, the control device 2 traverses the data of the suitable cutting velocity V, the separately input number of teeth, circular saw blade diameter, feeding amount per tooth, etc., into a signal corresponding to the circular sawing machine 10. The control device 2 transmits the signal to the drive device 13 and the moving device 14 (step S7). As a result, the drive device 13 drives the cutting tool 21 so as to drive at the suitable cutting velocity V providing a maximum life of the tool. In this way, the speed of the outer periphery of the circular saw blade is adjusted to the suitable cutting velocity V.

As described above, the material data including the plurality of chemical components of the work piece 20 and the mass or weight percentages thereof is input to the input device 4. There is provided the material-MR storage/arithmetic unit 5b storing the relationship between the chemical components, the mass or weight percentages, and the machinability ratio MR. Based on the chemical components and the mass or weight percentages, the material-MR storage/arithmetic unit 5b acquires the machinability ratio MR from the above relationship. Thus, it is possible to obtain the machinability ratio MR from the chemical components and the mass or weight percentages of the work piece obtained through analysis or the like. It is possible to obtain the suitable cutting velocity V providing the maximum life of the tool by the MR-V storage unit 5a from the machinability ratio MR and the tool data.

Thus, even when the work piece is new to the operator or when it is not an ordinary material, it is possible to easily and assuredly obtain the suitable cutting velocity providing the maximum life of the tool. Conventionally, in the case of a new material, much trial and error has been necessary to obtain the suitable cutting velocity. In the present method and in the present cutting machine 1, however, no such trial and error is necessary.

Tool data is input to the input device 4. The tool data relates to at least one of the following: the material of the edge of the cutting tool, cutlery steel type, the kind of tip material, the coating material, and the various cutter angles (rake angle, etc.). The MR-V relationship corresponding to the tool data is previously stored in the MR-V storage unit 5a. A control unit 2 acquires the cutting velocity V from the tool data and the machinability ratio MR. Thus, it is possible to obtain a suitable cutting velocity V corresponding to the type of the cutting tool 21.

In the case where the cutting tool 21 is unknown to the operator, the present method or the present cutting machine 1, it is also possible for the operator to input a coefficient or the like as tool data. The control device 2 acquires the cutting velocity V from each MR-V relationship stored in the MR-V storage unit 5a. The control device 2 performs calculation such as multiplying the cutting velocity V by the coefficient or the like. In this way, the control device 2 may acquire a predetermined cutting velocity V.

While the embodiments of invention have been described with reference to specific configurations, it will be apparent to those skilled in the art that many alternatives, modifications and variations may be made without departing from the scope of the present invention. Accordingly, embodiments of the present invention are intended to embrace all such alternatives, modifications and variations that may fall within the spirit and scope of the appended claims. For example, embodiments of the present invention should not be limited to the representative configurations, but may be modified, for example, as described below.

As described above, the cutting machine 1 may be a circular sawing machine, or a milling machine or the like. As described above, the cutting tool 21 may be a circular saw blade, or some other rotary tool such as a rotating bit, turning tool or the like.

As described above, the cutting machine 1 may have a drive device 13 for rotating the cutting tool 21. Alternatively, the cutting machine may have a drive device for rotating work piece, and the cutting velocity V may be adjusted to a predetermined speed through rotation of the work piece. In this case, the cutting tool may not be rotated.

The cutting machine 1 may or may not have the display device 3. Instead of the display device 3, the cutting machine 1 may have a voice guidance device.

The material data may be information related to a machinability ratio MR as described above, or it may be the machinability ratio MR itself. In the case where the material data is the machinability ratio MR itself, the suitable cutting velocity V providing a maximum life of the tool is acquired by the MR-V storage unit 5a.

The material-MR storage/arithmetic unit 5b may correspond to the material name only. Alternatively, the material-MR storage/arithmetic unit 5b may correspond to the chemical components, etc. only, and may calculate or acquire the machinability ratio MR based on the chemical components, etc.

The MR-V relationship is a relationship in which a larger cutting velocity V results in a larger machinability ratio MR. In other words, in the MR-V relationship, assuming other conditions to be the same, the cutting velocity V is not lowered when the machinability ratio MR increases. For example, the machinability ratio MR may increase slightly, or the cutting velocity V may remain the same.

As described above, the material-MR storage/arithmetic unit stores the relational expression for deriving the machinability ratio MR from the chemical components and the mass or weight percentages. Alternatively, the material-MR storage/arithmetic unit may have a map for deriving the machinability ratio MR from the chemical components and the mass or weight percentages.

The display device 3 and the input device 4 may be separate from or integral with each other. The MR-V storage unit 5a and the material-MR storage/arithmetic unit 5b may be separate or integrated memories.

As described above, the cutting machine 1 can control the drive device 13 so as to attain a cutting velocity V helping to achieve a longer service life of the cutting tool 21. Alternatively, the cutting machine may control the drive device 13 so as to attain a cutting velocity V allowing the cutting tool 21 to cut the work piece 20 neatly.

The input device 4, the display device 3 and the control device 2 may be special devices for the cutting machine 1, or may be general-purpose devices such as personal digital assistants. Instead of the input device 4, the display device 3 and the control device 2, personal digital assistants may perform computation processing or the like and emit a signal. A general-purpose cutting machine equipped with a transmission/reception device may transmit the above-mentioned signal and operate based on the signal.

The control device may be comprised of one or more units. The MR-V storage unit 5a and the material-MR storage/arithmetic unit 5b may be provided in one component of the control device 2 as described above. Alternatively, the units 5a and 5b are provided at different components of the control device 2.

## Claims

1. A method of controlling a machine (1) comprising the steps of:
calculating a machinability ratio MR from the following equation: MR = 86.0 - 37.6 × C - 8.2 × Mn - 6.1 × Si - 5.6 × Ni - 3.2 × Cr - 3.1 × Mo, where C, Mn, Si, Ni, Cr, and Mo respectively represent a weight percentage (wt%) of carbon, manganese, silicon, nickel, chromium, and molybdenum, respectively, included in a work piece, and
obtaining a cutting velocity at which the work piece is cut so as to attain a maximum life of a tool (21) based on the machinability ratio MR of the work piece, and
cutting the work piece at the cutting velocity by the tool (21).

2. A cutting machine (1) comprising:
a material-MR storage arithmetic unit (5b) configure to calculate a machinability ratio MR based on a material data of a work piece,
an MR-V storage unit (5a) configure to previously store a relationship MR-V between the machinability ratio MR and a desired cutting velocity V, wherein the desired cutting velocity V is determined by taking into account that the life of a tool (21) attains a maximal length, and
a control device (2) configure to obtain a cutting velocity from the machinability ratio MR and the relationship MR-V, wherein the work piece is cut based on the obtained cutting velocity.

3. The cutting machine (1) of claim 2 wherein the material-MR storage arithmetic unit (5b) is configured to calculate the machinability ratio MR from the following equation: MR = 86.0 - 37.6 × C - 8.2 × Mn - 6.1 × Si - 5.6 × Ni - 3.2 × Cr - 3.1 × Mo, where C, Mn, Si, Ni, Cr, and Mo respectively represent a weight percentage (wt%) of carbon, manganese, silicon, nickel, chromium, and molybdenum, respectively, included in the work piece.
